# EUROPEAN PATENT APPLICATION

(11) **EP 4 675 430 A1**
(43) Date of publication of application: **07.01.2026**
(21) Application number: 24778054.7
(22) Date of filing: 27.03.2024
(51) Int. Cl.: G06F 9/50

(54) **DATA PROCESSING SYSTEM AND DATA PROCESSING METHOD APPLIED TO BIG DATA**

(30) Priority: 27.03.2023 CN 202310308210
(71) Applicant: Huawei Cloud Computing Technologies Co., Ltd., Guizhou 550025 (CN)
(72) Inventor: MENG, Jie, Guiyang, Guizhou 550025 (CN); ZHANG, Qin, Guiyang, Guizhou 550025 (CN); LIU, Jiang, Guiyang, Guizhou 550025 (CN); LI, Feng, Guiyang, Guizhou 550025 (CN); WANG, Cheng, Guiyang, Guizhou 550025 (CN)
(74) Representative: Goddar, Heinz J.
(86) International application number: PCT/CN2024/084032
(87) International publication number: WO 2024/199268

(57) **Abstract**

This application relates to a data processing system applied to big data, and a data processing method. The data processing system includes a first subsystem implementing an engine layer, a second subsystem implementing a cache acceleration layer, and a third subsystem implementing a storage layer. The cache acceleration layer and the storage layer include GPU processing units. The first subsystem is configured to determine primitive operators to be executed by the GPU processing units and a scheduling plan of the primitive operators based on a query request, and output the scheduling plan to the second subsystem. The second subsystem converts the primitive operators into intermediate representation operators and schedules the intermediate representation operators to second execution objects based on the scheduling plan. The second subsystem drives, by using a concurrency model, third execution objects to execute the intermediate representation operators. Execution results are output by the third execution objects to the first subsystem, and the execution results are used to obtain a query result. According to the data processing system in embodiments of this application, data migration costs in a scenario in which storage and computing are separated can be reduced, and data processing efficiency can be improved.

## Description

This application claims priority to Chinese Patent Application No. 202310308210.6, filed with the China National Intellectual Property Administration on March 27, 2023 and entitled "DATA PROCESSING SYSTEM APPLIED TO BIG DATA AND DATA PROCESSING METHOD", which is incorporated herein by reference in its entirety.

### TECHNICAL FIELD

This application relates to the field of cloud computing, and in particular, to a data processing system applied to big data and a data processing method.

### BACKGROUND

In early construction of a big data cluster, a manner of integrating storage and computing is usually used, where a ratio of storage resources to computing resources is fixed. However, with development of big data services and computing technologies, a balance of a requirement ratio of storage resources to computing resources is broken. The fixed ratio of storage resources to computing resources makes it very difficult for the big data cluster to adapt to a new requirement.

In this case, the manner of big data cluster construction gradually transitions to separation of storage and computing. In the form of separation of storage and computing, storage resources and computing resources are two independent clusters, to avoid a waste and improve data processing efficiency. However, the separation of storage and computing brings a plurality of problems. For example, separate setting of storage resources and computing resources leads to a large quantity of data access and data migration requirements, resulting in data processing performance deterioration and the like. How to reduce data migration costs and improve data processing efficiency in a scenario in which storage and computing are separated becomes a research hotspot in this field.

### SUMMARY

In view of this, a data processing system applied to big data and a data processing method are proposed. According to the data processing system in embodiments of this application, data migration costs in a scenario in which storage and computing are separated can be reduced, and data processing efficiency can be improved.

According to a first aspect, an embodiment of this application provides a data processing system applied to big data. The data processing system includes a first subsystem implementing an engine layer, a second subsystem implementing a cache acceleration layer, and a third subsystem implementing a storage layer. The cache acceleration layer and the storage layer include GPU processing units. The first subsystem is configured to determine primitive operators to be executed by the GPU processing units and a scheduling plan of the primitive operators based on a query request, and output the scheduling plan to the second subsystem. The scheduling plan includes the primitive operators, first execution objects of the primitive operators, and an execution sequence of the primitive operators. The second subsystem converts the primitive operators into intermediate representation operators and schedules the intermediate representation operators to second execution objects based on the scheduling plan. The intermediate representation operators are operators executable for the GPU processing units. The second subsystem drives, by using a concurrency model, third execution objects to execute the intermediate representation operators. Execution results are output by the third execution objects to the engine layer, and the execution results are used to obtain a query result. The first execution objects, the second execution objects, and the third execution objects are determined based on real-time resource usage of the GPU processing units. The third execution objects are GPU processing units included in the cache acceleration layer and the storage layer.

According to the data processing system applied to big data in this embodiment of this application, the first subsystem implementing the engine layer determines the primitive operators to be executed by the GPU processing units and the scheduling plan of the primitive operators based on the query request, and outputs the scheduling plan to the second subsystem, so that computing power of the GPU processing units may also be applied to execution of the operators, thereby accelerating efficiency of executing the operators and reducing pressure of executing the operators on a central processing unit. The second subsystem converts the primitive operators into the intermediate representation operators and schedules the intermediate representation operators to the second execution objects based on the scheduling plan. The intermediate representation operators are operators executable for the GPU processing units, and may shield a hardware difference between different types of GPU processing units at a bottom layer, so that different GPU processing units can reuse a same intermediate representation operator, thereby reducing data processing costs for separately performing operator conversion on each GPU processing unit, and ensuring relatively high data processing efficiency. The second subsystem drives, by using the concurrency model, the third execution objects to execute the intermediate representation operators, thereby further improving actual operator execution efficiency. The execution results are output by the third execution objects to the first subsystem, and the execution results are used to obtain the query result. In this way, full data does not need to be completely transmitted to the first subsystem, thereby greatly reducing an amount of data moved to the first subsystem. The operators may be executed by the GPU processing unit at the storage layer, so that a total amount of data moved by the third subsystem is also reduced. Therefore, according to the data processing system in this embodiment of this application, data migration costs in a scenario in which storage and computing are separated can be reduced, and data processing efficiency can be improved. The first execution objects, the second execution objects, and the third execution objects are determined based on real-time resource usage of the GPU processing units. The third execution objects are GPU processing units included in the cache acceleration layer and the storage layer. In this way, a GPU processing unit that actually executes an operator may be a GPU processing unit that is most suitable for executing the operator in all of the GPU processing units, thereby further improving operator execution efficiency.

With reference to the first aspect, in a first possible implementation of the data processing system applied to big data, the second subsystem is further configured to: when an available resource on the first execution object is greater than or equal to resource consumption for the first execution object to execute the intermediate representation operator, use the first execution object as the second execution object; or when an available resource on the first execution object is less than resource consumption for the first execution object to execute the intermediate representation operator, determine the second execution object of the intermediate representation operator based on real-time resource usage of each GPU processing unit and resource consumption for executing the intermediate representation operator on the GPU processing unit.

The real-time resource usage of each GPU processing unit is checked again before operator scheduling, so that a scheduling manner can be adjusted in a timely manner, to ensure optimal efficiency of data processing corresponding to the scheduling manner.

With reference to the first aspect or the first possible implementation of the first aspect, in a second possible implementation of the data processing system applied to big data, the second subsystem is further configured to: when an available resource on the second execution object is greater than or equal to resource consumption for the second execution object to execute the intermediate representation operator, use the second execution object as the third execution object; or when an available resource on the second execution object is less than resource consumption for the second execution object to execute the intermediate representation operator, determine the third execution object of the intermediate representation operator based on the real-time resource usage of each GPU processing unit and the resource consumption for executing the intermediate representation operator on the GPU processing unit.

The real-time resource usage of each GPU processing unit is checked again before operator execution, so that a scheduling manner can be adjusted in a timely manner, to ensure optimal efficiency of data processing corresponding to the scheduling manner.

With reference to any one of the first aspect or the foregoing possible implementations of the first aspect, in a third possible implementation of the data processing system applied to big data, the cache acceleration layer further includes a first storage unit, and the storage layer further includes a second storage unit.

With reference to the third possible implementation of the first aspect, in a fourth possible implementation of the data processing system applied to big data, determining the primitive operators to be executed by the GPU processing units and the scheduling plan of the primitive operators based on the query request includes: determining the primitive operators to be executed by the GPU processing units and an execution sequence of the primitive operators based on the query request; determining resource consumption for executing the primitive operators on each GPU processing unit; and determining the first execution objects of the primitive operators based on the real-time resource usage of each GPU processing unit and the resource consumption for executing the primitive operators on the GPU processing unit. The resource consumption is determined based on at least one of the following: a difference between effects of executing the primitive operator on different GPU processing units, an initial startup delay of the GPU processing unit, real-time transmission bandwidth between the GPU processing unit and a central processing unit, an amount of real-time data transmission between the GPU processing unit and the central processing unit, an available video memory size of the GPU processing unit, and network transmission bandwidth of the GPU processing unit.

In this manner, the scheduling plan may be optimized based on the computing power of the GPU processing units, to determine a more appropriate first execution object for the primitive operator.

With reference to any one of the first aspect, or the first to the third possible implementations of the first aspect, in a fifth possible implementation of the data processing system applied to big data, determining the primitive operators to be executed by the GPU processing units and the scheduling plan of the primitive operators based on the query request includes: determining, based on a storage location of data needed for execution of the primitive operator, data migration costs for executing the primitive operator on each GPU processing unit; and determining a GPU processing unit with minimum data migration costs as the first execution object of the primitive operator.

In this manner, the scheduling plan may be optimized based on the storage location of the data, to determine a more appropriate first execution object for the primitive operator, thereby improving flexibility of the manner of determining the first execution object.

With reference to any one of the first aspect, or the foregoing possible implementations of the first aspect, in a sixth possible implementation of the data processing system applied to big data, that the second subsystem converts the primitive operators into the intermediate representation operators and schedules the intermediate representation operators to the second execution objects based on the scheduling plan includes: converting each primitive operator into a semantic-layer intermediate representation operator; obtaining, a data-layer intermediate representation operator and/or a computing-layer intermediate representation operator corresponding to each primitive operator based on the semantic-layer intermediate representation operators; grouping the data-layer intermediate representation operators and the computing-layer intermediate representation operators corresponding to the primitive operators in the scheduling plan based on the real-time resource usage of each GPU processing unit, to obtain a plurality of groups of intermediate representation operators, where intermediate representation operators in a same group correspond to a same second execution object; fusing the intermediate representation operators in the same group; and scheduling a plurality of groups of fused intermediate representation operators to corresponding second execution objects respectively. The semantic-layer intermediate representation operator provides a logical expression capability, the data-layer intermediate representation operator provides a data access capability, and the computing-layer intermediate representation operator provides a computing capability.

In this manner, different types of GPU processing units can execute a same intermediate representation operator, and operator conversion does not need to be separately performed with regard to a hardware feature of each type of GPU processing units, thereby simplifying an operator conversion manner, reducing data processing costs needed for operator conversion, and improving data processing efficiency.

With reference to the sixth possible implementation of the first aspect, in a seventh possible implementation of the data processing system applied to big data, the data-layer intermediate representation operator supports access to variable-length data, and the second subsystem processes variable-length data in a continuous memory matching manner. The variable-length data includes a character string.

With reference to any one of the first aspect or the foregoing possible implementations of the first aspect, in an eighth possible implementation of the data processing system applied to big data, that the second subsystem drives, by using the concurrency model, the third execution objects to execute the intermediate representation operators includes: for any GPU processing unit serving as the third execution object, when a quantity of intermediate representation operators to be executed by the GPU processing unit is greater than a second threshold, or an operator execution speed of the GPU processing unit is less than a third threshold, increasing a quantity of concurrent execution units configured to execute intermediate representation operators, and/or when receiving data from another GPU processing unit, controlling the another GPU processing unit to reduce an operator execution speed; or when a quantity of intermediate representation operators to be executed by the GPU processing unit is less than or equal to a second threshold, or an operator execution speed of the GPU processing unit is greater than or equal to a third threshold, reducing a quantity of concurrent execution units configured to execute intermediate representation operators, and/or when receiving data from another GPU processing unit, controlling the another GPU processing unit to improve an operator execution speed.

In this manner, data processing efficiency of the GPU processing units can be separately controlled, to implement control of data processing efficiency of the entire system, thereby ensuring the data processing efficiency of the system.

With reference to any one of the third to the eighth possible implementations of the first aspect, in a ninth possible implementation of the data processing system applied to big data, that the second subsystem drives, by using the concurrency model, the third execution objects to execute the intermediate representation operators includes: when memory of the GPU processing unit is insufficient, storing, by using the first storage unit and/or the second storage unit, data needed by the GPU processing unit to execute the intermediate representation operator and an execution result of the intermediate representation operator.

In this manner, a storage resource management manner is more flexible.

With reference to any one of the first aspect or the foregoing possible implementations of the first aspect, in a tenth possible implementation of the data processing system applied to big data, for any GPU processing unit in the system, when a result of executing an intermediate representation operator by the GPU processing unit is not used as data needed for execution of another intermediate representation operator, the GPU processing unit outputs the execution result to the first subsystem.

In this manner, an execution result received by the first subsystem may be an ultimate execution result of operators pushed down to the second subsystem and the third subsystem, thereby reducing an amount of data of execution results moved by the second subsystem and the third subsystem to the first subsystem.

With reference to any one of the first aspect or the foregoing possible implementations of the first aspect, in an eleventh possible implementation of the data processing system applied to big data, data transmission is performed between the GPU processing units via a multipath direct interconnection channel.

In this manner, data transmission between the GPU processing units may no longer depend on forwarding through the second subsystem and the central processing unit, thereby improving data transmission efficiency.

According to a second aspect, an embodiment of this application provides a data processing method. The method is performed by a data processing system applied to big data. The data processing system includes a first subsystem implementing an engine layer, a second subsystem implementing a cache acceleration layer, and a third subsystem implementing a storage layer. The cache acceleration layer and the storage layer include GPU processing units. The method includes: The first subsystem determines primitive operators to be executed by the GPU processing units and a scheduling plan of the primitive operators based on a query request, and outputs the scheduling plan to the second subsystem, where the scheduling plan includes the primitive operators, first execution objects of the primitive operators, and an execution sequence of the primitive operators; the second subsystem converts the primitive operators into intermediate representation operators and schedules the intermediate representation operators to second execution objects based on the scheduling plan, where the intermediate representation operators are operators executable for the GPU processing units; and the second subsystem drives, by using a concurrency model, third execution objects to execute the intermediate representation operators, where execution results are output by the third execution objects to the first subsystem, and the execution results are used to obtain a query result. The first execution object, the second execution object, and the third execution object are determined based on real-time resource usage of the GPU processing units. The third execution objects are GPU processing units included in the cache acceleration layer and the storage layer.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain principles of this application.
FIG. 1 shows an example arrangement manner in a scenario in which storage and computing are separated in a conventional technology;
FIG. 2 shows an example application scenario of a data processing system according to an embodiment of this application;
FIG. 3 shows a diagram of a structure of a data processing system according to an embodiment of this application;
FIG. 4 shows an example method for converting primitive operators into intermediate representation operators according to an embodiment of this application;
FIG. 5 shows an example of data-layer intermediate representation operators and computing-layer intermediate representation operators before grouping, and a plurality of groups of intermediate representation operators after the grouping according to an embodiment of this application;
FIG. 6 shows an example concurrency model according to an embodiment of this application; and
FIG. 7 shows a schematic flowchart of a data processing method according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as "exemplary" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

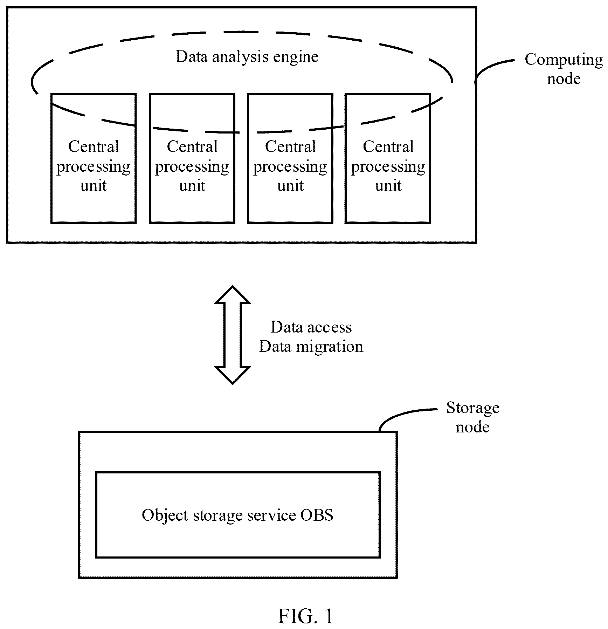

FIG. 1 shows an example arrangement manner in a scenario in which storage and computing are separated in a conventional technology.

As shown in FIG. 1, the scenario in which storage and computing are separated may include a storage node and a computing node. The storage node is configured to provide a storage resource, and may include an object storage service (object storage service, OBS) and the like. The computing node is configured to provide a computing resource, and includes a plurality of central processing units (central processing unit, CPU). The central processing unit may run a plurality of data analysis engines, such as spark and presto. The data analysis engine is configured to receive a query request, and provide a scheduling plan based on the query request. The scheduling plan includes operators corresponding to the query request, central processing units for executing the operators, an execution sequence of the operators, and the like. The scheduling plan is output to the central processing units for executing the operators. The central processing units may obtain, based on the scheduling plan, data needed for execution of the operators from the storage node. After the data is obtained, the operators may be executed to obtain corresponding execution results. The execution results from the central processing units are fed back to the data analysis engine for aggregation, to obtain a query result corresponding to the query request.

The separation of storage and computing brings a plurality of problems. The computing node that uses the central processing units as a center has poor performance when processing a computing-intensive operation. In addition, the scheduling plan considers no heterogeneous computing resource, and utilization of a computing resource is low. A large amount of data needs to be moved between the computing node and the storage node. As a result, data processing performance deteriorates. For the scenario in which storage and computing are separated, the solution in the conventional technology is limited in terms of reducing data migration costs and improving data processing efficiency.

In view of this, a data processing system applied to big data and a data processing method are proposed. Operators at an engine layer are pushed down to a cache acceleration layer and a storage layer, to form a multi-level operator pushdown solution. GPU processing units at the cache acceleration layer and the storage layer provide computing power to execute the operators, to form a multi-level heterogeneous computing-power supply solution. In addition, the storage layer and the cache acceleration layer may be used for data storage, to form a multi-level data storage solution. According to the data processing system applied to big data and the electronic device in embodiments of this application, data migration costs in a scenario in which storage and computing are separated can be reduced, and data processing efficiency can be improved.

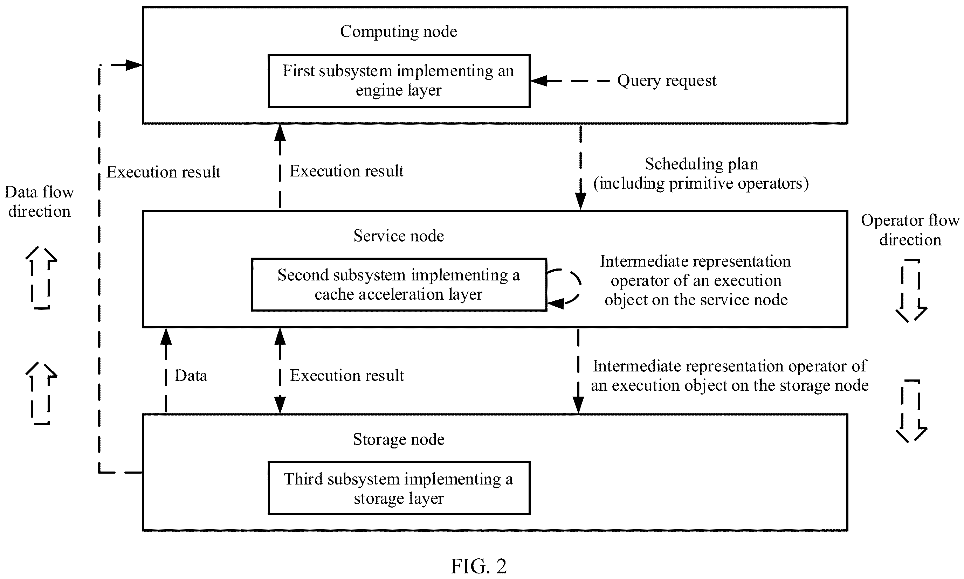

FIG. 2 shows an example application scenario of a data processing system according to an embodiment of this application.

As shown in FIG. 2, the data processing system in this embodiment of this application may include a first subsystem implementing an engine layer, a second subsystem implementing a cache acceleration layer, and a third subsystem implementing a storage layer. The engine layer is a data analysis engine, configured to complete conversion of a query request into operators and generate a scheduling plan of the operators. The cache acceleration layer and the storage layer may each include a GPU processing unit and a storage unit that is configured to store data. In other words, both the cache acceleration layer and the storage layer may perform data storage work and may complete particular computing work, and each GPU processing unit may be used as an execution object of an operator.

In the example shown in FIG. 2, the first subsystem implementing the engine layer may be disposed on a computing node in a scenario in which storage and computing are separated. The third subsystem implementing the storage layer may be disposed on a storage node in a scenario in which storage and computing are separated. The second subsystem implementing the cache acceleration layer may be disposed on an independent service node in a scenario in which storage and computing are separated.

When a user initiates a query request, the first subsystem may receive the query request; obtain corresponding primitive operators and a scheduling plan of the primitive operators based on the query request; and transmit the scheduling plan (including the primitive operators) to the second subsystem. The second subsystem completes conversion of the primitive operators into intermediate representation operators based on the scheduling plan, and determines execution objects of the intermediate representation operators that are obtained through the conversion. When the execution object is a GPU processing unit on the service node, the operator is transmitted to the GPU processing unit on the service node; or when the execution object is a GPU processing unit on the storage node, the operator is pushed down to the GPU processing unit on the storage node. The GPU processing unit executes the intermediate representation operator, and data to be used may be stored on the storage node or may be stored on the service node. For the GPU processing unit on the service node, when the data to be used is stored on the storage node, the data can be obtained from the storage node. The GPU processing unit executes the intermediate representation operator, and the data to be used may alternatively be an execution result of another intermediate representation operator. Therefore, the execution result may be transmitted between any two GPU processing units on the storage node and the service node. When the execution result of the intermediate representation operator is not used as data needed for execution of another intermediate representation operator, the execution result may be directly transmitted to the first subsystem. The first subsystem may obtain, by integrating all received execution results, a query result corresponding to the query request. In an entire process, the operators flow in a sequence of the first subsystem → the second subsystem → the third subsystem, and data (including the execution results) flows in a sequence of the third subsystem → the second subsystem → the first subsystem.

A person skilled in the art should understand that, during actual application, the second subsystem may alternatively be disposed on the computing node; and the first subsystem and the second subsystem may be disposed on a same computing node, or may be disposed on different computing nodes, provided that the third subsystem is neither disposed on a same node as the first subsystem nor disposed on a same node as the second subsystem. A specific manner of disposing the first subsystem, the second subsystem, and the third subsystem is not limited in this application.

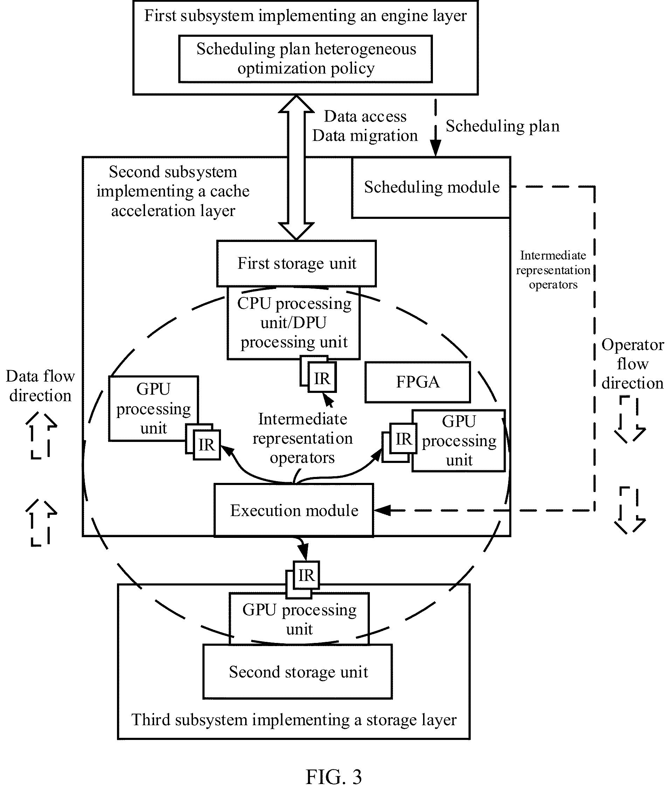

FIG. 3 shows a diagram of a structure of a data processing system according to an embodiment of this application.

As shown in FIG. 3, in a possible implementation, this application proposes a data processing system applied to big data. The data processing system includes a first subsystem implementing an engine layer, a second subsystem implementing a cache acceleration layer, and a third subsystem implementing a storage layer. The cache acceleration layer and the storage layer include GPU processing units.

The first subsystem is configured to determine primitive operators to be executed by the GPU processing units and a scheduling plan of the primitive operators based on a query request, and output the scheduling plan to the second subsystem. The scheduling plan includes the primitive operators, first execution objects of the primitive operators, and an execution sequence of the primitive operators.

The second subsystem converts the primitive operators into intermediate representation operators and schedules the intermediate representation operators to second execution objects based on the scheduling plan. The intermediate representation operators are operators executable for the GPU processing units.

The second subsystem drives, by using a concurrency model, third execution objects to execute the intermediate representation operators. Execution results are output by the third execution objects to the first subsystem, and the execution results are used to obtain a query result.

The first execution objects, the second execution objects, and the third execution objects are determined based on real-time resource usage of the GPU processing units. The third execution objects are GPU processing units included in the cache acceleration layer and the storage layer.

For example, the query request may be initiated by a user. For example, the statement "select count(distinct(lo_orderkey)) from test_db.lineorder_1day sql" may be a query request for querying all non-repeated "lo_orderkey" fields in the table "test_db.lineorder_1day sql". The first subsystem may receive the query request; and obtain corresponding primitive operators and a scheduling plan of the primitive operators based on the query request by using a scheduling plan heterogeneous optimization policy. The scheduling plan heterogeneous optimization policy may be implemented based on a conventional technology. A programming language used by the primitive operators may be determined by a specific data analysis engine. This is not limited in this application. The primitive operators executable for the GPU processing units may be operators in a data reading and/or preprocessing phase. These operators involve relatively simple computing operations, so that operator pushdown is easy to implement.

The scheduling plan may include the primitive operators, first execution objects of the primitive operators, and an execution sequence of the primitive operators. The first execution objects may be selected from the GPU processing units. A first execution object of each primitive operator may be one GPU processing unit. One GPU processing unit may simultaneously be used as first execution objects of a plurality of primitive operators. The scheduling plan may indicate a manner of operator pushdown. For example, the primitive operators that are obtained by converting the foregoing statement and can be executed by the GPU processing units may include an operator A that expresses a filtering operation, an operator B that expresses a format conversion operation, an operator C that expresses a mapping operation, an operator D that expresses an aggregation operation, and an operator E that expresses a deduplication operation. The execution sequence may be the operator A → the operator B → the operator C → the operator D → the operator E. It is assumed that the cache acceleration layer includes a GPU processing unit 1 to a GPU processing unit 3, and the storage layer includes a GPU processing unit 4. It is determined, based on the query request, that the operator A, the operator B, and the operator C can be executed by the GPU processing unit 4, and the operator D and the operator E can be executed by the GPU processing unit 1. In this case, the GPU processing unit 4 may be used as first execution objects of the operator A, the operator B, and the operator C; and the GPU processing unit 1 may be used as first execution objects of the operator D and the operator E.

An example of the scheduling plan may be as follows: The GPU processing unit 4 obtains data needed for execution of the operator A from the third subsystem implementing the storage layer, and executes the operator A, to obtain an execution result of the operator A. The GPU processing unit 4 executes the operator B based on the execution result of the operator A, to obtain an execution result of the operator B. The GPU processing unit 4 executes the operator C based on the execution result of the operator B, to obtain an execution result of the operator C, and outputs the execution result of the operator C to the third subsystem implementing the cache acceleration layer. The GPU processing unit 1 executes the operator D based on the execution result of the operator C, to obtain an execution result of the operator D. The GPU processing unit 1 executes the operator E based on the execution result of the operator D, to obtain an execution result of the operator E, and outputs the execution result of the operator E to the first subsystem implementing the engine layer. A specific form of the scheduling plan is not limited in this application.

For a manner of determining the scheduling plan, refer to the following further description of the first subsystem. For example, in the second subsystem, a scheduling plan determined by a scheduling module may be further specified and may be output to the scheduling module. The programming language of the primitive operators may not be recognized by all of the GPU processing units. For example, the primitive operators may be written in a language that can be recognized by a CPU processing unit, so the primitive operators cannot be directly executed by the GPU processing units. In addition, languages that can be recognized by different types of GPU processing units may also vary. Therefore, that the second subsystem converts the primitive operators into the intermediate representation operators based on the scheduling plan may be: The scheduling module converts the primitive operators to obtain the intermediate representation operators executable for the GPU processing units, so that the GPU processing units can be identified by different types of GPU processing units. For example, an operator A1, an operator B 1, an operator C1, an operator D1, and an operator E1 (the intermediate representation operators) may be respectively obtained based on the operator A, the operator B, the operator C, the operator D, and the operator E (the primitive operators). For an example of obtaining the intermediate representation operators through conversion, refer to the following further description of the second subsystem. The converted operators are pushed down by an execution module to the GPU processing units for execution.

A person skilled in the art should understand that a plurality of intermediate representation operators may be obtained for one primitive operator, and a specific manner of converting the primitive operators into the intermediate representation operators is not limited in this application.

The second execution objects may be selected from the GPU processing units included in the cache acceleration layer and the storage layer. A second execution object of each intermediate representation operator may be one GPU processing unit. One GPU processing unit may simultaneously be used as second execution objects of a plurality of intermediate representation operators. A second execution object of an intermediate representation operator may be the same as or different from a first execution object of a primitive operator corresponding to the intermediate representation operator. Whether the second execution object is the same as the first execution object may be determined based on actual resource usage of the GPU processing units. For a specific determining manner, refer to the following related description.

For example, the execution module may be further disposed in the second subsystem. The scheduling module transmits, to the execution module, intermediate representation operators that can be pushed down, and then the execution module pushes down the intermediate representation operators to GPU processing units (which may be at least one of GPU processing units in a dashed-line box in FIG. 3) included in the cache acceleration layer and/or the storage layer.

The second subsystem drives, by using the concurrency model, the GPU processing units to execute the intermediate representation operators (IRs in FIG. 3). For example, the execution module may drive, by using the concurrency model, the GPU processing units to execute the intermediate representation operators. For an example of an implementation thereof, refer to the following further description of the second subsystem. The concurrency model may be, for example, a concurrency programming model actor in a conventional technology. The third execution objects may be selected from GPU processing units included in the cache acceleration layer and the storage layer. A third execution object of each intermediate representation operator may be one GPU processing unit. One GPU processing unit may simultaneously be used as third execution objects of a plurality of intermediate representation operators. A third execution object of an intermediate representation operator may be the same as or different from a second execution object of the intermediate representation operator. Whether the third execution object is the same as the second execution object may be determined based on actual resource usage of the GPU processing units. For a specific determining manner, refer to the following related description.

It is assumed that, the foregoing example of the scheduling plan is used, the second execution objects of the intermediate representation operators are the same as the third execution objects of the intermediate representation operators, and are also the same as the first execution objects of the primitive operators corresponding to the intermediate representation operators. Then a manner of executing the intermediate representation operators by the GPU processing units may be as follows: The GPU processing unit 4 obtains data needed for execution of the operator A1 from the storage layer, and executes the operator A1, to obtain an execution result of the operator A1. The GPU processing unit 4 executes the operator B1 based on the execution result of the operator A1, to obtain an execution result of the operator B1. The GPU processing unit 4 executes the operator C1 based on the execution result of the operator B1, to obtain an execution result of the operator C1, and outputs the execution result of the operator C1 to the second subsystem. The GPU processing unit 1 executes the operator D1 based on the execution result of the operator C1, to obtain an execution result of the operator D1. The GPU processing unit 1 executes the operator E1 based on the execution result of the operator D1, to obtain an execution result of the operator E1, and outputs the execution result of the operator E1 to the first subsystem.

According to the data processing system applied to big data in this embodiment of this application, the first subsystem implementing the engine layer determines the primitive operators to be executed by the GPU processing units and the scheduling plan of the primitive operators based on the query request, and outputs the scheduling plan to the second subsystem, so that computing power of the GPU processing units may also be applied to execution of the operators, thereby accelerating efficiency of executing the operators and reducing pressure of executing the operators on a central processing unit. The second subsystem converts the primitive operators into the intermediate representation operators and schedules the intermediate representation operators to the second execution objects based on the scheduling plan. The intermediate representation operators are operators executable for the GPU processing units, and may shield a hardware difference between different types of GPU processing units at a bottom layer, so that different GPU processing units can reuse a same intermediate representation operator, thereby reducing data processing costs for separately performing operator conversion on each GPU processing unit, and ensuring relatively high data processing efficiency. The second subsystem drives, by using the concurrency model, the third execution objects to execute the intermediate representation operators, thereby further improving actual operator execution efficiency. The execution results are output by the third execution objects to the first subsystem, and the execution results are used to obtain the query result. In this way, full data does not need to be completely transmitted to the first subsystem, thereby greatly reducing an amount of data moved to the first subsystem. The operators may be executed by the GPU processing unit at the storage layer, so that a total amount of data moved by the third subsystem is also reduced. Therefore, according to the data processing system in this embodiment of this application, data migration costs in a scenario in which storage and computing are separated can be reduced, and data processing efficiency can be improved. The first execution objects, the second execution objects, and the third execution objects are determined based on real-time resource usage of the GPU processing units. The third execution objects are GPU processing units included in the cache acceleration layer and the storage layer. In this way, a GPU processing unit that actually executes an operator may be a GPU processing unit that is most suitable for executing the operator in all of the GPU processing units, thereby further improving operator execution efficiency.

In a possible implementation, the cache acceleration layer further includes a first storage unit, and the storage layer further includes a second storage unit.

The GPU processing unit at the cache acceleration layer and the first storage unit may be disposed independently from each other. Further, the cache acceleration layer implemented by the second subsystem may further include a CPU processing unit, a DPU processing unit, a field programmable logic gate array FPGA, and the like. The CPU processing unit and the DPU processing unit may be disposed as being integrated with the first storage unit. A storage unit of the storage layer includes the second storage unit, and the GPU processing unit at the storage layer may be disposed as being integrated with the second storage unit.

The CPU processing unit, the DPU processing unit, and the field programmable logic gate array FPGA can also be configured to execute an operator, that is, may replace the GPU processing unit, or collaborate with the GPU processing unit. In this case, an intermediate representation operator may be identified jointly by the GPU processing unit, the CPU processing unit, the DPU processing unit, and the field programmable logic gate array FPGA. The CPU processing unit, the DPU processing unit, and the field programmable logic gate array FPGA may also be used as the first execution object, the second execution object, and the third execution object. To describe the request, the following still uses an example in which the GPU processing units are used as the first execution objects, the second execution objects, and the third execution objects for description. However, a person skilled in the art should understand that a quantity and a type of processing units that can execute the intermediate representation operators are not limited in this application.

The following describes an example manner of determining the first execution objects.

In a possible implementation, determining the primitive operators to be executed by the GPU processing units and the scheduling plan of the primitive operators based on the query request includes:
determining the primitive operators to be executed by the GPU processing units and the execution sequence of the primitive operators based on the query request;
determining resource consumption for executing the primitive operators on each GPU processing unit; and
determining the first execution objects of the primitive operators based on the real-time resource usage of each GPU processing unit and the resource consumption for executing the primitive operators on the GPU processing unit.

The resource consumption is determined based on at least one of the following: a difference between effects of executing the primitive operator on different GPU processing units, an initial startup delay of the GPU processing unit, real-time transmission bandwidth between the GPU processing unit and a central processing unit, an amount of real-time data transmission between the GPU processing unit and the central processing unit, an available video memory size of the GPU processing unit, and network transmission bandwidth of the GPU processing unit.

For example, the first subsystem may first determine, based on the query request, the primitive operators to be executed by the GPU processing unit, for example, the operator A, the operator B, the operator C, the operator D, and the operator E described previously; and determine the execution sequence of the primitive operators, for example, the operator A → the operator B → the operator C → the operator D → the operator E described previously.

After a primitive operator is determined, the first subsystem may determine, based on capabilities of executing the primitive operator on different GPU processing units, the resource consumption for executing the primitive operator on each GPU processing unit. The primitive operator that may be determined include an operator such as a scan, agg, or join operator. The resource consumption may be determined based on at least one of the following: a difference between effects of executing the primitive operator on different GPU processing units, an initial startup delay of the GPU processing unit, real-time transmission bandwidth between the GPU processing unit and a central processing unit (CPU processing unit), an amount of real-time data transmission between the GPU processing unit and the central processing unit, an available video memory size of the GPU processing unit, and network transmission bandwidth of the GPU processing unit. When determining the first execution object, if a path startup cost of the primitive operator is excessively high, the first subsystem may further divide the primitive operator, and then determine first execution objects based on portions that are obtained after the division. A specific manner of determining the resource consumption may be implemented based on a conventional technology, and details are not described herein again.

The first execution object of the primitive operator may be determined based on the real-time resource usage of each GPU processing unit and the resource consumption for executing the primitive operator on the GPU processing unit. For example, a GPU processing unit whose available resource meets execution of the primitive operator and whose resource consumption is less may be selected as the first execution object. A specific manner of determining the first execution object is not limited in this embodiment of this application.

In this manner, the scheduling plan may be optimized based on the computing power of the GPU processing units, to determine a more appropriate first execution object for the primitive operator.

In a possible implementation, determining the primitive operators to be executed by the GPU processing units and the scheduling plan of the primitive operators based on the query request includes:
determining, based on a storage location of data needed for execution of the primitive operator, data migration costs for executing the primitive operator on each GPU processing unit; and
determining a GPU processing unit with minimum data migration costs as the first execution object.

For example, generally the full data is stored in the second storage unit at the storage layer. However, because the first storage unit in the second subsystem may also be configured to store data, the full data may also be stored in the first storage unit. When storage locations of the data are different, data migration costs for the GPU processing unit to execute the operator vary accordingly. Therefore, for purpose of cost saving, data migration costs for executing the primitive operator on each GPU processing unit may first be determined based on a storage location of data needed for execution of the primitive operator. A GPU processing unit with minimum data migration costs is determined as the first execution object of the primitive operator.

When the full data is stored in both the first storage unit and the second storage unit, for the GPU processing units at the cache acceleration layer and the storage layer, data migration costs to be considered may be migration costs of the execution result of the operator. It can be understood that, data migration costs for transmitting an execution result from the second subsystem implementing the cache acceleration layer to the first subsystem implementing the engine layer are less than data migration costs for transmitting the execution result from the third subsystem implementing the storage layer to the first subsystem implementing the engine layer. Therefore, the first execution object of the primitive operator may be selected from a GPU processing unit at the cache acceleration layer. An example implementation of selecting a GPU processing unit at the cache acceleration layer as the first execution object of the primitive operator has been described previously. Details are not described herein again.

When the first storage unit does not store full data, for the GPU processing unit at the cache acceleration layer, data migration costs to be considered may include data migration costs of data needed for execution of the primitive operator and data migration costs of the execution result; and for the GPU processing unit at the storage layer, data migration costs of the execution result may be considered. A GPU processing unit with minimum data migration costs is determined as the first execution object of the primitive operator.

Further, when data migration costs of the GPU processing units are the same, the first execution object may be determined with reference to historical data. For example, historical execution objects of primitive operators of a same type may be queried, and a GPU processing unit that is selected most frequently in the historical execution objects of the primitive operators of the same type is determined as the first execution object of the primitive operator.

In this manner, the scheduling plan may be optimized based on the storage location of the data, to determine a more appropriate first execution object for the primitive operator, thereby improving flexibility of the manner of determining the first execution object.

The following describes an example manner of determining the second execution objects. The determining of the second execution objects may be completed by the second subsystem.

In a possible implementation, the second subsystem is further configured to:
when an available resource on the first execution object is greater than or equal to resource consumption for the first execution object to execute the intermediate representation operator, use the first execution object as the second execution object; or
when an available resource on the first execution object is less than resource consumption for the first execution object to execute the intermediate representation operator, determine the second execution object of the intermediate representation operator based on the real-time resource usage of each GPU processing unit and the resource consumption for executing the intermediate representation operator on the GPU processing unit.

For example, when the first execution object is determined, no operator conversion is performed. The second execution object is determined after operator conversion, and resource usage (including a resource utilization rate, bandwidth, load, and the like) of each GPU processing unit changes in real time. The following phenomenon may occur: After a GPU processing unit with a sufficient resource is determined as a first execution object of a primitive operator, to schedule an intermediate representation operator corresponding to the primitive operator to the GPU processing unit, the resource of the GPU processing unit is insufficient to support execution of the intermediate representation operator. In this case, if the intermediate representation operator is still scheduled to the GPU processing unit, the intermediate representation operator can be executed only after the GPU processing unit completes execution of an operator or task that occupies the resource. As a result, execution efficiency is reduced.

Therefore, in this embodiment of this application, based on the real-time resource usage of each GPU processing unit, when the available resource on the first execution object is greater than or equal to the resource consumption for the first execution object to execute the intermediate representation operator, the first execution object is used as the second execution object. In this case, the first execution object is the same as the second execution object. When the available resource on the first execution object is less than the resource consumption for the first execution object to execute the intermediate representation operator, the second execution object of the intermediate representation operator is determined based on the real-time resource usage of each GPU processing unit and the resource consumption for executing the intermediate representation operator on the GPU processing unit. For an example implementation thereof, refer to the foregoing manner of determining the first execution object, and simply replace the primitive operators with the intermediate representation operators. Details are not described herein again. In this case, the first execution object is different from the second execution object.

The real-time resource usage of each GPU processing unit is checked again before operator scheduling, so that a scheduling manner can be adjusted in a timely manner, to ensure optimal efficiency of data processing corresponding to the scheduling manner.

The following describes an example manner of determining the third execution objects. The determining of the third execution objects may be completed by the second subsystem.

In a possible implementation, the second subsystem is further configured to:
when an available resource on the second execution object is greater than or equal to resource consumption for the second execution object to execute the intermediate representation operator, use the second execution object as the third execution object; or
when an available resource on the second execution object is less than resource consumption for the second execution object to execute the intermediate representation operator, determine the third execution object of the intermediate representation operator based on the real-time resource usage of each GPU processing unit and the resource consumption for executing the intermediate representation operator on the GPU processing unit.

For example, scheduling of an operator takes a time, and the resource usage (including a resource utilization rate, bandwidth, load, and the like) of each GPU processing unit changes in real time. The following phenomenon may occur: After it is determined that a GPU processing unit with a sufficient resource can be used as a second execution object of an intermediate representation operator, in a process of scheduling the intermediate representation operator to the GPU processing unit, the resource of the GPU processing unit is occupied by another intermediate representation operator or another task. As a result, the resource of the GPU processing unit is insufficient to support execution of the intermediate representation operator after the intermediate representation operator is scheduled to the GPU processing unit. In this case, for the GPU processing unit to still execute the intermediate representation operator, the intermediate representation operator can be executed only after the GPU processing unit completes execution of the operator or task that occupies the resource. As a result, execution efficiency is reduced.

Therefore, in this embodiment of this application, based on the real-time resource usage of each GPU processing unit, when the available resource on the second execution object is greater than or equal to the resource consumption for the second execution object to execute the intermediate representation operator, the second execution object is used as the third execution object. In this case, the second execution object is the same as the third execution object. When the available resource on the second execution object is less than the resource consumption for the second execution object to execute the intermediate representation operator, the third execution object of the intermediate representation operator is determined based on the real-time resource usage of each GPU processing unit and the resource consumption for executing the intermediate representation operator on the GPU processing unit. For an example implementation thereof, refer to the foregoing manner of determining the first execution object, and simply replace the primitive operators with the intermediate representation operators. Details are not described herein again. In this case, the second execution object is different from the third execution object.

The real-time resource usage of each GPU processing unit is checked again before operator execution, so that a scheduling manner can be adjusted in a timely manner, to ensure optimal efficiency of data processing corresponding to the scheduling manner.

The following describes an example manner of converting the primitive operators into the intermediate representation operators according to an embodiment of this application.

In a possible implementation, that the second subsystem converts the primitive operators into the intermediate representation operators and schedules the intermediate representation operators to the second execution object based on the scheduling plan includes:
converting each primitive operator into a semantic-layer intermediate representation operator;
obtaining a data-layer intermediate representation operator and/or a computing-layer intermediate representation operator corresponding to each primitive operator based on the semantic-layer intermediate representation operators;
grouping the data-layer intermediate representation operators and the computing-layer intermediate representation operators corresponding to the primitive operators in the scheduling plan based on the real-time resource usage of each GPU processing unit, to obtain a plurality of groups of intermediate representation operators, where intermediate representation operators in a same group correspond to a same second execution object;
fusing the intermediate representation operators in the same group; and
scheduling a plurality of groups of fused intermediate representation operators to corresponding second execution objects respectively.

The semantic-layer intermediate representation operator provides a logical expression capability, the data-layer intermediate representation operator provides a data access capability, and the computing-layer intermediate representation operator provides a computing capability.

For example, in this embodiment of this application, a plurality of layers of intermediate representation operators are defined, including semantic-layer intermediate representation operators, data-layer intermediate representation operators, and computing-layer intermediate representation operators. The semantic-layer intermediate representation operator provides a logical expression capability, and is equivalent to relational algebra, for example: an intermediate representation operator selection representing a filtering operation, an intermediate representation operator projection representing a projection operation, or an intermediate representation operator aggregation representing an aggregation operation. The data-layer intermediate representation operator provides a data access capability, for example: an intermediate representation operator CreateArrowTable/AppendArrowTable/ScanArrowTable/MaterializeArrowTable for reading or writing memory data, or an intermediate representation operator CreateHashTable/HashTableInsert/LookupHashTable for reading or writing a mapping table. The computing-layer intermediate representation operator provides a computing capability, for example: an intermediate representation operator add/sub/mlu/div/mod representing a basic arithmetic operation (addition, subtraction, multiplication, division, or remainder), and an intermediate representation operator and/or/not representing an AND/OR/NOT operation, an intermediate representation operator hash representing a mapping operation, or an intermediate representation operator compare representing a comparison operation.

A person skilled in the art should understand that definable intermediate representation operators are not limited to the foregoing examples, and a specific manner of defining the intermediate representation operators is not limited in this application.

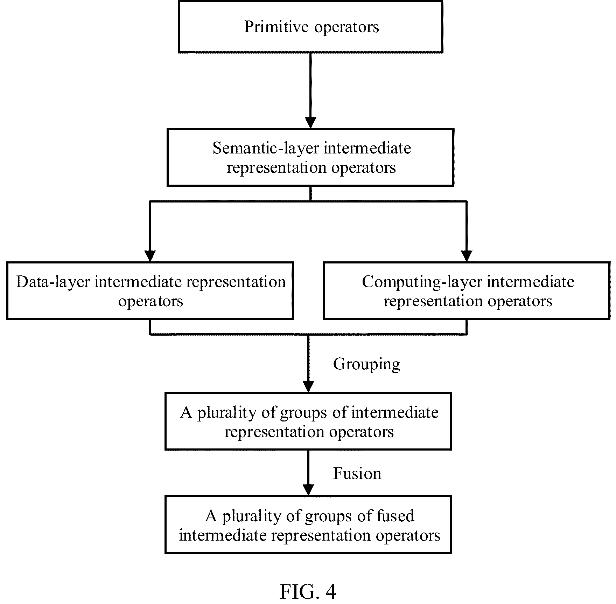

FIG. 4 shows an example method for converting primitive operators into intermediate representation operators according to an embodiment of this application.

As shown in FIG. 4, when operator conversion is performed, each primitive operator may be first converted into a semantic-layer intermediate representation operator, to obtain a logical relationship of the operator. In this case, the intermediate representation operator may be an operator at a coarse granularity. Then a data-layer intermediate representation operator and/or a computing-layer intermediate representation operator corresponding to each primitive operator are/is obtained based on the semantic-layer intermediate representation operator, to shield a hardware difference between different types of GPU processing units. The data-layer intermediate representation operators and the computing-layer intermediate representation operators corresponding to the primitive operators in the scheduling plan are grouped based on real-time resource usage of each GPU processing unit, to obtain a plurality of groups of intermediate representation operators and complete dynamic division of the data-layer intermediate representation operators and the computing-layer intermediate representation operators. A group of obtained intermediate representation operators may be operators at a fine granularity.

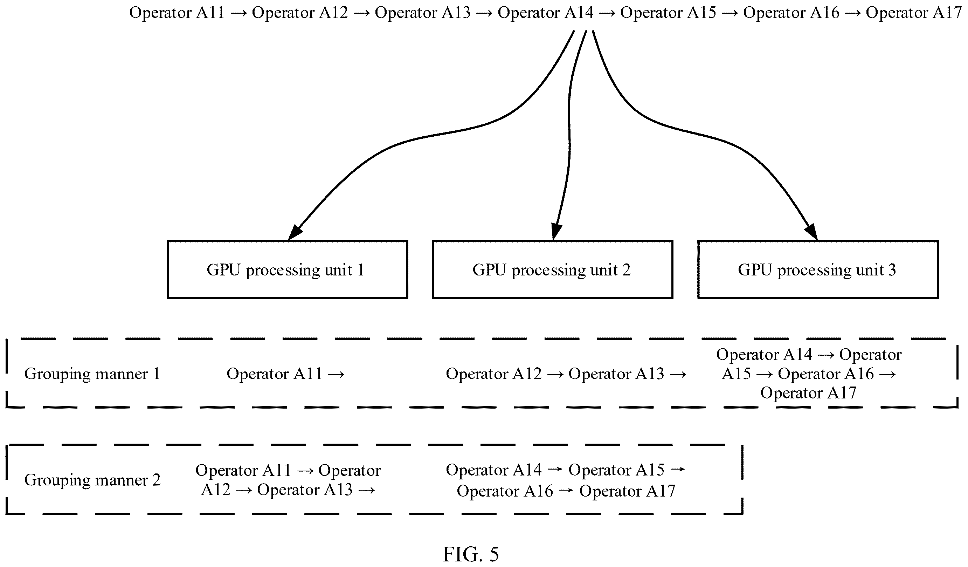

FIG. 5 shows an example of data-layer intermediate representation operators and computing-layer intermediate representation operators before grouping, and a plurality of groups of intermediate representation operators after the grouping according to an embodiment of this application. Operators A11 to A17 may be the data-layer intermediate representation operators and the computing-layer intermediate representation operators before the grouping. A grouping manner 1 corresponds to a case in which a resource of a GPU processing unit 3 is sufficient. The operator A11 is used as a group alone, and a corresponding second execution object may be a GPU processing unit 1. The operator A12 and the operator A13 are put into a group, and a corresponding second execution object may be a GPU processing unit 2. The operators A14 to A17 are put into a group, and a corresponding second execution object may be the GPU processing unit 3.

A grouping manner 2 corresponds to a case in which the resource of the GPU processing unit 3 is insufficient. The operators A11 to A13 are put into a group, and a corresponding second execution object may be the GPU processing unit 1. The operators A14 to A17 are put into a group, and a corresponding second execution object may be the GPU processing unit 2.

A person skilled in the art should understand that, there may be more choices of grouping manners, provided that the real-time resource usage of each GPU processing unit can meet execution of the plurality of groups of intermediate representation operators that are obtained through the grouping, and a specific grouping manner is not limited in this application.

Intermediate representation operators in a same group correspond to a same second execution object. Therefore, fusion may be performed based on a local Java interface, to obtain a plurality of groups of fused intermediate representation operators. Then each group of fused intermediate representation operators is scheduled respectively to a corresponding second execution object. In this case, the scheduling plan is updated.

In this manner, different types of GPU processing units can execute a same intermediate representation operator, and operator conversion does not need to be separately performed with regard to a hardware feature of each type of GPU processing units, thereby simplifying an operator conversion manner, reducing data processing costs needed for operator conversion, and improving data processing efficiency.

In a possible implementation, the data-layer intermediate representation operator supports access to variable-length data, and the second subsystem processes variable-length data in a continuous memory matching manner. The variable-length data includes a character string. The continuous memory matching manner may be implemented based on an algorithm in a conventional technology, and details are not described herein again.

The following describes an example manner in which the second subsystem drives, by using the concurrency model, the third execution objects to execute the intermediate representation operators according to an embodiment of this application.

In a possible implementation, that the second subsystem drives, by using the concurrency model, the third execution objects to execute the intermediate representation operators includes:
for any GPU processing unit serving as the third execution object, when a quantity of intermediate representation operators to be executed by the GPU processing unit is greater than a second threshold, or an operator execution speed of the GPU processing unit is less than a third threshold, increasing a quantity of concurrent execution units configured to execute intermediate representation operators, and/or when receiving data from another GPU processing unit, controlling the another GPU processing unit to reduce an operator execution speed; or
when a quantity of intermediate representation operators to be executed by the GPU processing unit is less than or equal to a second threshold, or an operator execution speed of the GPU processing unit is greater than or equal to a third threshold, reducing a quantity of concurrent execution units configured to execute intermediate representation operators, and/or when receiving data from another GPU processing unit, controlling the another GPU processing unit to improve an operator execution speed.

For example, according to an operator execution sequence, an execution status of an operator that is executed later (also referred to as a previous operator in the following description) is affected by both data processing efficiency of an execution object of an operator that is executed earlier (also referred to as a later operator in the following description) and data processing efficiency of an execution object of the operator. For example, when a data processing speed of an execution object of a previous operator is relatively high, a data processing speed of an execution object of a later operator is relatively low, and an execution result of the previous operator is output to the execution object of the later operator, a large amount of accumulation may be caused because the execution result cannot be executed in a timely manner, resulting in occupation of a large quantity of storage resources of the later operator; or when a data processing speed of an execution object of a previous operator is relatively low, and a data processing speed of an execution object of a later operator is relatively high, a case may occur, in which an excessively large quantity of computing resources of the execution object of the previous operator are occupied but the execution object of the later operator is probably idle, resulting in unbalanced use of computing resources.

For further improvement of data processing efficiency, a concurrency model is used in this embodiment of this application. A feature of the concurrency model is that, a quantity of execution units (actors) that can be concurrently executed can be dynamically adjusted when a resource is sufficient. For any GPU processing unit serving as the third execution object: When the quantity of intermediate representation operators to be executed by the GPU processing unit is greater than the second threshold, or the operator execution speed of the GPU processing unit is less than the third threshold, it may be considered that there is an unbalance of data processing efficiency between the GPU processing unit and another GPU processing unit that executes a previous operator. A manner of increasing the quantity of concurrent execution units configured to execute intermediate representation operators may be used, to improve data processing efficiency of the GPU processing unit; and/or when data from another GPU processing unit is received, a manner of controlling the another GPU processing unit to reduce an operator execution speed may be used, to reduce data processing efficiency of an execution object of a previous operator, thereby implementing a balance of data processing efficiency between the GPU processing units. The manner of controlling the another GPU processing unit to reduce the operator execution speed may be: controlling the another GPU processing unit to reduce a quantity of concurrent execution units configured to execute intermediate representation operators.

Similarly, when the quantity of intermediate representation operators to be executed by the GPU processing unit is less than or equal to the second threshold, or the operator execution speed of the GPU processing unit is greater than or equal to the third threshold, a manner of reducing the quantity of concurrent execution units configured to execute intermediate representation operators may be used, to reduce the data processing efficiency of the GPU processing unit; and/or when data from another GPU processing unit is received, a manner of controlling the another GPU processing unit to increase an operator execution speed may be used, to improve data processing efficiency of an execution object of a previous operator, thereby implementing a balance of data processing efficiency between the GPU processing units. The manner of controlling the another GPU processing unit to increase the operator execution speed may be: controlling the another GPU processing unit to increase a quantity of concurrent execution units configured to execute intermediate representation operators.

The second threshold and the third threshold may be specified as needed. Specific values of the second threshold and the third threshold are not limited in this application.

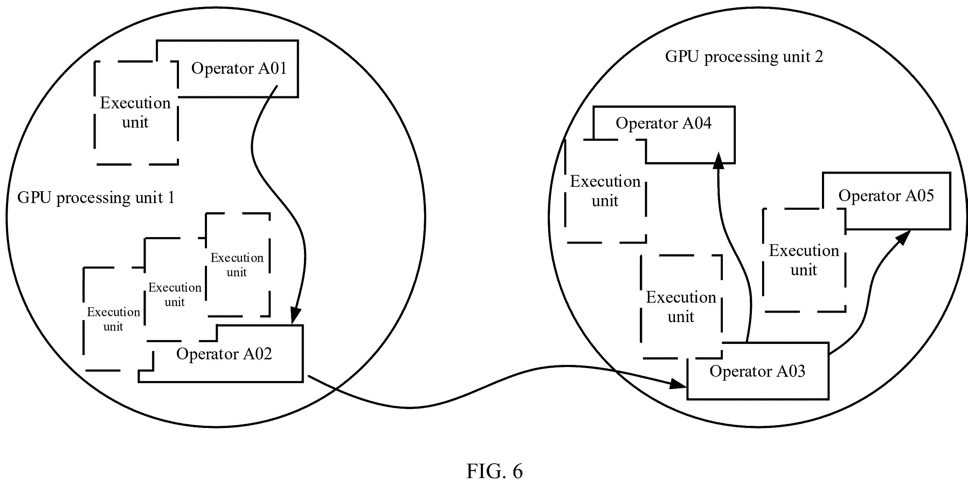

FIG. 6 shows an example concurrency model according to an embodiment of this application. As shown in FIG. 6, it is assumed that, according to an updated scheduling plan, a GPU processing unit 1 executes operators A01 and A02, and a GPU processing unit 2 executes operators A03 to A05. The GPU processing unit 1 executes the operator A01 by using an execution unit (actor), and then detects that an operator execution speed of the GPU processing unit 1 is less than the third threshold. Therefore, when the operator A02 is executed, a quantity of concurrent execution units configured to execute intermediate representation operators may be increased to 3 in an example shown in FIG. 6. The GPU processing unit 2 executes the operators A03 to A05 each by using one execution unit.

In this manner, data processing efficiency of the GPU processing units can be separately controlled, to implement control of data processing efficiency of the entire system, thereby ensuring the data processing efficiency of the system.

In a possible implementation, that the second subsystem drives, by using the concurrency model, the third execution objects to execute the intermediate representation operators includes:
when memory of the GPU processing unit is insufficient, storing, by using the first storage unit and/or the second storage unit, data needed by the GPU processing unit to execute the intermediate representation operator and an execution result of the intermediate representation operator.

For example, because no corresponding storage unit is disposed for some GPU processing units (for example, the GPU processing unit at the cache acceleration layer), a case may occur, in which a memory is insufficient, and data needed for execution of an intermediate representation operator and an execution result of the intermediate representation operator cannot be stored. In this case, the data needed for execution of the intermediate representation operator and the execution result of the intermediate representation operator may be stored in the first storage unit and/or the second storage unit. When the memory of the GPU processing unit is sufficient, the data needed for execution of the intermediate representation operator is obtained from the first storage unit and/or the second storage unit. After the execution result of the intermediate representation operator is stored in the first storage unit and/or the second storage unit, a step of outputting the execution result to the first subsystem may be completed by using any GPU processing unit.

In this manner, a storage resource management manner is more flexible.

In a possible implementation, for any GPU processing unit in the system, when a result of executing an intermediate representation operator by the GPU processing unit is not used as data needed for execution of another intermediate representation operator, the GPU processing unit outputs the execution result to the first subsystem.

For example, an execution result of a previous operator may be data needed for execution of a later operator, or may not be needed for execution of another operator. Therefore, for any GPU processing unit, when a result of executing an intermediate representation operator by the GPU processing unit is used as data needed for execution of another intermediate representation operator, the execution result may be output to a GPU processing unit that executes the another intermediate representation operator; or when a result of executing an intermediate representation operator by the GPU processing unit is not used as data needed for execution of another intermediate representation operator, the execution result may be output to the first subsystem.

In this manner, an execution result received by the first subsystem may be an ultimate execution result of operators pushed down to the second subsystem and the third subsystem, thereby reducing an amount of data of execution results moved by the second subsystem and the third subsystem to the first subsystem.

In a possible implementation, data transmission is performed between the GPU processing units via a multipath direct interconnection channel.

For example, a multipath direct interconnection channel may be disposed between the GPU processing units, and data transmission between the GPU processing units is performed based on a storage location (the first storage unit/the second storage unit) of data and a network bandwidth status via the multipath direct interconnection channel. Transmitted data may be the foregoing execution result. A manner of establishing the multipath direct interconnection channel may be implemented based on a conventional technology, and details are not described herein again.

In this manner, data transmission between the GPU processing units may no longer depend on forwarding through the second subsystem and the central processing unit, thereby improving data transmission efficiency.

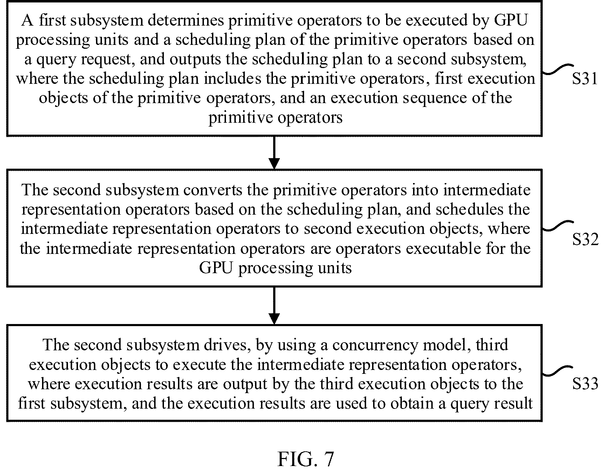

A data processing method is provided according to an embodiment of this application. FIG. 7 shows a schematic flowchart of a data processing method according to an embodiment of this application.

As shown in FIG. 7, in a possible implementation, the method is performed by a data processing system applied to big data. The data processing system includes a first subsystem implementing an engine layer, a second subsystem implementing a cache acceleration layer, and a third subsystem implementing a storage layer. The cache acceleration layer and the storage layer include GPU processing units. For an example of the data processing system, refer to the foregoing description and related descriptions of FIG. 3 to FIG. 6.

The method includes steps S31 to S33.

Step S31: The first subsystem determines primitive operators to be executed by the GPU processing units and a scheduling plan of the primitive operators based on a query request, and outputs the scheduling plan to the second subsystem. The scheduling plan includes the primitive operators, first execution objects of the primitive operators, and an execution sequence of the primitive operators.

Step S32: The second subsystem converts the primitive operators into intermediate representation operators and schedules the intermediate representation operators to second execution objects based on the scheduling plan. The intermediate representation operators are operators executable for the GPU processing units.

Step S33: The second subsystem drives, by using a concurrency model, third execution objects to execute the intermediate representation operators. Execution results are output by the third execution objects to the first subsystem, and the execution results are used to obtain a query result.

The first execution objects, the second execution objects, and the third execution objects are determined based on real-time resource usage of the GPU processing units. The third execution objects are GPU processing units included in the cache acceleration layer and the storage layer.

For description and explanation of this embodiment of the data processing method and the steps, refer to the foregoing description of the data processing system. Details are not described herein again.

The flowcharts and block diagrams in the accompanying drawings show possible implementation of system architecture, functions, and operations of the apparatus, system, method, and computer program product according to a plurality of embodiments of this application. In this regard, each block in the flowcharts or block diagrams may represent a module, a program segment, or a part of the instructions; and the module, the program segment, or the part of the instructions includes one or more executable instructions for implementing a specified logical function. In some alternative implementations, a function marked in the block may occur in a sequence different from that marked in the accompanying drawings. For example, two consecutive blocks may actually be executed substantially in parallel, and may sometimes be executed in a reverse order, depending on a function involved.

It should also be noted that each block in the block diagrams and/or flowcharts, and a combination of the blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are examples, not exhaustive, and not limited to the disclosed embodiments. Many modifications and variations are apparent to a person of ordinary skill in the art without departing from the scope of the described embodiments. The selection of terms used in this specification is intended to best explain principles of the embodiments, practical application, or improvements to technologies in the market, or to enable another person of ordinary skill in the art to understand the embodiments disclosed in this specification.

## Claims

1. A data processing system applied to big data, wherein the data processing system comprises a first subsystem implementing an engine layer, a second subsystem implementing a cache acceleration layer, and a third subsystem implementing a storage layer, and the cache acceleration layer and the storage layer comprise GPU processing units;
the first subsystem is configured to determine primitive operators to be executed by the GPU processing units and a scheduling plan of the primitive operators based on a query request, and output the scheduling plan to the second subsystem, wherein the scheduling plan comprises the primitive operators, first execution objects of the primitive operators, and an execution sequence of the primitive operators;
the second subsystem converts the primitive operators into intermediate representation operators and schedules the intermediate representation operators to second execution objects based on the scheduling plan, wherein the intermediate representation operators are operators executable for the GPU processing units;
the second subsystem drives, by using a concurrency model, third execution objects to execute the intermediate representation operators, wherein execution results are output by the third execution objects to the first subsystem, and the execution results are used to obtain a query result; and
the first execution objects, the second execution objects, and the third execution objects are determined based on real-time resource usage of the GPU processing units, and the third execution objects are GPU processing units comprised in the cache acceleration layer and the storage layer.

2. The system according to claim 1, wherein the second subsystem is further configured to:
when an available resource on the first execution object is greater than or equal to resource consumption for the first execution object to execute the intermediate representation operator, use the first execution object as the second execution object; or
when an available resource on the first execution object is less than resource consumption for the first execution object to execute the intermediate representation operator, determine the second execution object of the intermediate representation operator based on real-time resource usage of each GPU processing unit and resource consumption for executing the intermediate representation operator on the GPU processing unit.

3. The system according to claim 1 or 2, wherein the second subsystem is further configured to:
when an available resource on the second execution object is greater than or equal to resource consumption for the second execution object to execute the intermediate representation operator, use the second execution object as the third execution object; or
when an available resource on the second execution object is less than resource consumption for the second execution object to execute the intermediate representation operator, determine the third execution object of the intermediate representation operator based on the real-time resource usage of each GPU processing unit and the resource consumption for executing the intermediate representation operator on the GPU processing unit.

4. The system according to any one of claims 1 to 3, wherein the cache acceleration layer further comprises a first storage unit, and the storage layer further comprises a second storage unit.

5. The method according to claim 4, wherein determining the primitive operators to be executed by the GPU processing units and the scheduling plan of the primitive operators based on the query request comprises:
determining the primitive operators to be executed by the GPU processing units and the execution sequence of the primitive operators based on the query request;
determining resource consumption for executing the primitive operators on each GPU processing unit; and
determining the first execution objects of the primitive operators based on the real-time resource usage of each GPU processing unit and the resource consumption for executing the primitive operators on the GPU processing unit, wherein
the resource consumption is determined based on at least one of the following: a difference between effects of executing the primitive operator on different GPU processing units, an initial startup delay of the GPU processing unit, real-time transmission bandwidth between the GPU processing unit and a central processing unit, an amount of real-time data transmission between the GPU processing unit and the central processing unit, an available video memory size of the GPU processing unit, and network transmission bandwidth of the GPU processing unit.

6. The system according to any one of claims 1 to 4, wherein determining the primitive operators to be executed by the GPU processing units and the scheduling plan of the primitive operators based on the query request comprises:
determining, based on a storage location of data needed for execution of the primitive operator, data migration costs for executing the primitive operator on each GPU processing unit; and
determining a GPU processing unit with minimum data migration costs as the first execution object of the primitive operator.

7. The system according to any one of claims 1 to 6, wherein that the second subsystem converts the primitive operators into the intermediate representation operators and schedules the intermediate representation operators to the second execution objects based on the scheduling plan comprises:
converting each primitive operator into a semantic-layer intermediate representation operator;
obtaining a data-layer intermediate representation operator and/or a computing-layer intermediate representation operator corresponding to each primitive operator based on the semantic-layer intermediate representation operators;
grouping the data-layer intermediate representation operators and the computing-layer intermediate representation operators corresponding to the primitive operators in the scheduling plan based on the real-time resource usage of each GPU processing unit, to obtain a plurality of groups of intermediate representation operators, wherein intermediate representation operators in a same group correspond to a same second execution object;
fusing the intermediate representation operators in the same group; and
scheduling a plurality of groups of fused intermediate representation operators to corresponding second execution objects respectively; wherein
the semantic-layer intermediate representation operator provides a logical expression capability, the data-layer intermediate representation operator provides a data access capability, and the computing-layer intermediate representation operator provides a computing capability.

8. The system according to claim 7, wherein the data-layer intermediate representation operator supports access to variable-length data, and the second subsystem processes variable-length data in a continuous memory matching manner, and the variable-length data comprises a character string.

9. The system according to any one of claims 1 to 8, wherein that the second subsystem drives, by using the concurrency model, the third execution objects to execute the intermediate representation operators comprises:
for any GPU processing unit serving as the third execution object, when a quantity of intermediate representation operators to be executed by the GPU processing unit is greater than a second threshold, or an operator execution speed of the GPU processing unit is less than a third threshold, increasing a quantity of concurrent execution units configured to execute intermediate representation operators, and/or when receiving data from another GPU processing unit, controlling the another GPU processing unit to reduce an operator execution speed; or
when a quantity of intermediate representation operators to be executed by the GPU processing unit is less than or equal to a second threshold, or an operator execution speed of the GPU processing unit is greater than or equal to a third threshold, reducing a quantity of concurrent execution units configured to execute intermediate representation operators, and/or when receiving data from another GPU processing unit, controlling the another GPU processing unit to improve an operator execution speed.

10. The system according to any one of claims 4 to 9, wherein that the second subsystem drives, by using the concurrency model, the third execution objects to execute the intermediate representation operators comprises:
when memory of the GPU processing unit is insufficient, storing, by using the first storage unit and/or the second storage unit, data needed by the GPU processing unit to execute the intermediate representation operator and an execution result of the intermediate representation operator.

11. The system according to any one of claims 1 to 10, wherein for any GPU processing unit in the system, when a result of executing an intermediate representation operator by the GPU processing unit is not used as data needed for execution of another intermediate representation operator, the GPU processing unit outputs the execution result to the first subsystem.

12. The system according to any one of claims 1 to 11, wherein data transmission is performed between the GPU processing units via a multipath direct interconnection channel.

13. A data processing method, wherein the method is performed by a data processing system applied to big data, the data processing system comprises a first subsystem implementing an engine layer, a second subsystem implementing a cache acceleration layer, and a third subsystem implementing a storage layer, the cache acceleration layer and the storage layer comprise GPU processing units, and the method comprises:
determining, by the first subsystem, primitive operators to be executed by the GPU processing units and a scheduling plan of the primitive operators based on a query request, and outputting the scheduling plan to the second subsystem, wherein the scheduling plan comprises the primitive operators, first execution objects of the primitive operators, and an execution sequence of the primitive operators;
converting, by the second subsystem, the primitive operators into intermediate representation operators and scheduling the intermediate representation operators to second execution objects based on the scheduling plan, wherein the intermediate representation operators are operators executable for the GPU processing units; and
driving, by the second subsystem by using a concurrency model, third execution objects to execute the intermediate representation operators, wherein execution results are output by the third execution objects to the first subsystem, and the execution results are used to obtain a query result; and
the first execution objects, the second execution objects, and the third execution objects are determined based on real-time resource usage of the GPU processing units, and the third execution objects are GPU processing units comprised in the cache acceleration layer and the storage layer.
